# FASCICULE DE BREVET EUROPEEN

(11) **EP 2 634 896 B1**
(45) Date de publication et mention de la délivrance du brevet: **28.07.2021**
(21) Numéro de dépôt: 13156952.7
(22) Date de dépôt: 27.02.2013
(51) Int. Cl.: H02K 5/20, H02K 9/06, H02K 9/19, H02K 9/22

(54) **Moteur électrique fermé comprenant un échangeur thermique**
Geschlossener, einen Wärmetauscher umfassender Elektromotor
Sealed electric motor comprising a heat exchanger

(30) Priorité: 29.02.2012 FR 1251842
(43) Date de publication de la demande: 04.09.2013
(73) Titulaire: ALSTOM Transport Technologies, 93400 Saint-Ouen (FR)
(72) Inventeur: Periot, Robert, 64460 Lamayou (FR)
(74) Mandataire: Lavoix

(56) Documents cités:
- WO-A2-2005/008860
- DE-A1- 10 122 425
- DE-A1- 19 949 140
- None

## Description

La présente invention concerne un moteur électrique fermé, du type comprenant :
- une carcasse délimitant un compartiment intérieur définissant un volume intérieur gazeux,
- des moyens de conversion de l'énergie électrique reçue par le moteur en énergie mécanique, les moyens de conversion comprenant un stator et un rotor, le stator comprenant au moins des bobines,
- des moyens de refroidissement liquide du compartiment intérieur du moteur, et
- des moyens de couplage thermique entre le compartiment intérieur et les moyens de refroidissement liquide.

De tels moteurs sont utilisés dans les véhicules de transport ferroviaire, par exemple pour la motorisation de rames électriques de tramway circulant dans les villes.

De manière connue, les moyens de conversion de l'énergie électrique en énergie mécanique compris dans de tels moteurs génèrent une quantité de chaleur importante, notamment par effet Joule. La chaleur accumulée dans le compartiment intérieur du moteur est alors transmise par conduction à travers la carcasse à un système de refroidissement liquide ménagé dans celle-ci.

Toutefois, un tel système de dissipation de chaleur peut s'avérer insuffisant dans certains régimes de fonctionnement du moteur, pouvant conduire à un emballement thermique de celui-ci.

Par suite, un dispositif de couplage thermique destiné à améliorer le transfert de chaleur du compartiment intérieur du moteur vers le système de refroidissement liquide est parfois installé dans le compartiment intérieur. Un tel dispositif est par exemple décrit dans EP 2 282 395 A2.

Dans ce document, les bobines du stator du moteur baignent dans une matrice de résine polymérique dans laquelle est chargé un élément conducteur de chaleur. La matrice forme un pont de conduction entre les bobines et l'enveloppe et les flasques de la carcasse du moteur. Le pont ainsi formé augmente le transfert de chaleur générée par le fonctionnement du moteur au système de refroidissement liquide. D'autres exemples d'art antérieur sont les documents WO 2005/008860, DE 101 22 425 A1 et DE 199 49 140 A1.

Un tel dispositif de couplage thermique ne donne pas entière satisfaction. En effet, il est complexe, nécessite un aménagement particulier du moteur et ne peut être ajouté à un moteur en cours de vie.

Un but de l'invention est donc d'obtenir un moteur fermé comprenant un dispositif de couplage thermique efficace, simple, facile à installer et qui peut être ajouté au moteur en cours de vie.

A cet effet, l'invention a pour objet un moteur fermé tel que formulé dans la revendication 1. Les modes de réalisation préférés sont définis dans les revendications dépendantes.

L'invention sera mieux comprise à la lecture de la description qui va suivre, donnée uniquement à titre d'exemple et faite en se référant aux dessins annexés, sur lesquels :
- la Figure 1 est une vue en coupe partielle d'un moteur fermé selon l'invention ;
- la Figure 2 est une vue de profil d'un échangeur thermique utilisé dans un moteur selon l'invention ;

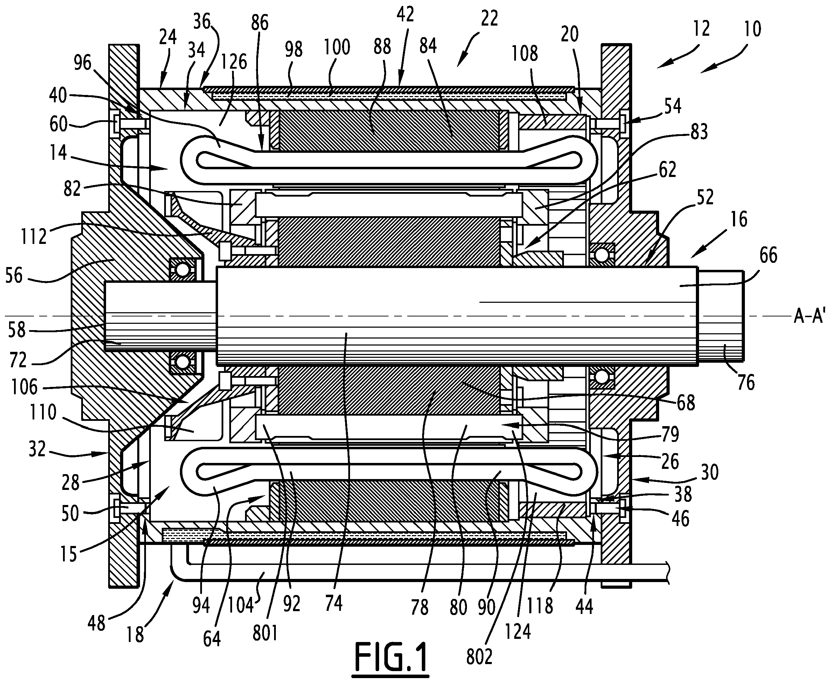

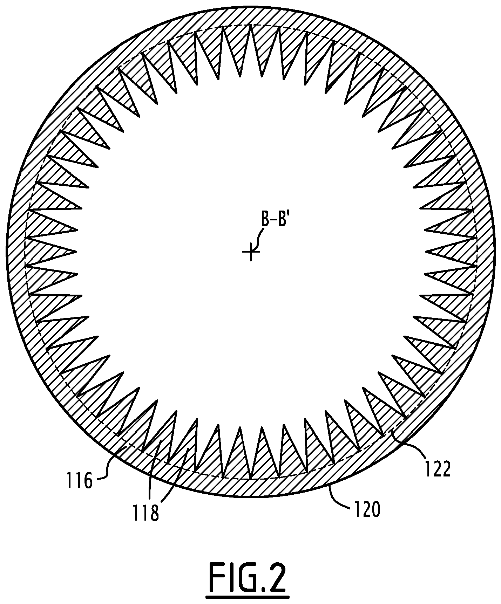

Les Figures 1 et 2 décrivent un premier moteur 10 selon l'invention. Ce moteur 10 est un moteur de type « brushless », c'est-à-dire dépourvu de balais. Il est par exemple destiné à être monté dans un engin, notamment un véhicule ferroviaire tel qu'un tramway, pour assurer la propulsion de l'engin.

En référence à la Figure 1, le moteur 10 comprend une carcasse 12 délimitant un compartiment intérieur 14 définissant un volume intérieur gazeux 15, des moyens 16 de conversion de l'énergie électrique reçue par le moteur en énergie mécanique, des moyens 18 de refroidissement liquide du compartiment intérieur 14 du moteur 10, et selon l'invention, des moyens 20 de couplage thermique entre le compartiment intérieur 14 et l'extérieur 22 du moteur fermé.

La carcasse 12 comprend une enveloppe 24 de forme générale cylindrique présentant une ouverture frontale 26 et une ouverture dorsale 28 sensiblement perpendiculaires à un axe longitudinal A-A' de l'enveloppe 24. Elle comporte en outre un flasque frontal 30 destiné à obturer l'ouverture frontale 26 et un flasque dorsal 32 destiné à obturer l'ouverture dorsale 28.

L'enveloppe 24 comprend une paroi interne 34 délimitant le compartiment intérieur 14 du moteur fermé 10 et une paroi externe 36 dans laquelle sont ménagés les moyens de refroidissement liquide 18. Comme on le verra par la suite, l'enveloppe 24 comporte également une lèvre périphérique frontale 38, une lèvre périphérique dorsale 40 et une peau extérieure 42 fixée sur sa paroi externe 36.

La lèvre périphérique frontale 38 est solidaire de l'enveloppe 24 et est comprise dans un plan sensiblement perpendiculaire à l'axe longitudinal A-A'. Des orifices 44 de réception de moyens de fixation 46 du flasque frontal 30 sur l'enveloppe 24 sont ménagés dans la lèvre périphérique frontale 38.

La lèvre périphérique dorsale 40 est solidaire de l'enveloppe 24 et s'étend dans un plan sensiblement perpendiculaire à l'axe longitudinal A-A'. Des orifices de réception 48 de moyens de fixation 50 du flasque dorsal 32 sur l'enveloppe 24 sont ménagés dans la lèvre périphérique dorsale 40.

La peau 42 présente une forme générale cylindrique de diamètre légèrement supérieur au diamètre de la paroi externe 36 et de hauteur prise suivant l'axe A-A' inférieure à la hauteur de l'enveloppe 24.

Dans l'exemple de la Figure 1, la peau 42 est soudée sur la paroi externe 36 et est réalisée en acier inoxydable.

De manière classique, la peau 42 peut également être rivetée ou vissée à la paroi externe 36.

Le flasque frontal 30 présente une forme générale circulaire et comprend un orifice central 52 traversant d'un arbre de rotor, comme on le verra par la suite.

Le flasque frontal 30 présente également sur sa périphérie des orifices 54 de réception des moyens de fixation 46.

Dans l'exemple de la Figure 1, les moyens de fixation 46 comprennent des vis engagées dans les orifices de réception 44, 54. Le flasque frontal 30 obture alors l'ouverture frontale 26 dans une position sensiblement perpendiculaire à l'axe longitudinal A-A'.

Le flasque dorsal 32 comprend une partie centrale 56 en surépaisseur et une chambre centrale 58 de forme générale cylindrique ménagée dans sa partie centrale 56, comme illustré sur la Figure 1. La chambre centrale 58 est destinée à la réception d'un arbre de rotor, comme on le verra par la suite.

Le flasque dorsal 32 présente également sur sa périphérie des orifices de réception 60 des moyens de fixation 48.

Dans l'exemple de la Figure 1, les moyens de fixation 48 comprennent des vis engagées dans les orifices de réception 46, 60. Le flasque dorsal 32 est alors fixé dans une position sensiblement perpendiculaire à l'axe longitudinal A-A'.

La carcasse 12 comprenant l'enveloppe 24 et les flasques frontal 30 et dorsal 32 délimite ainsi le compartiment intérieur 14 du moteur 10.

Les moyens 16 de conversion de l'énergie électrique reçue par le moteur 10 en énergie mécanique comprennent un rotor 62 et un stator 64.

Le rotor 62 du moteur 10 comprend un arbre 66 et une culasse de rotor 68.

L'arbre 66 est mobile en rotation autour de l'axe longitudinal A-A'.

L'arbre 66 comporte une partie dorsale 72 destinée à être reçue dans la chambre centrale 58 du flasque dorsal 32 et une partie intermédiaire 74 traversant l'orifice central 52 du flasque frontal 30.

L'arbre 66 comprend également une partie frontale 76 solidaire de la partie intermédiaire 74 et faisant saillie hors de la carcasse 12. Cette partie 76 est destinée à être mise en prise avec un mécanisme de déplacement (non visible) de l'engin sur lequel le moteur 10 est disposé.

La culasse 68 présente une forme générale cylindrique et est fixée sur l'arbre 66. Elle est mobile conjointement à la rotation de l'arbre 66.

La culasse de rotor 68 comporte des éléments ferromagnétiques 78 propres à coopérer magnétiquement avec le stator 64 pour entraîner l'arbre 66 en rotation.

Ainsi, la culasse du rotor 68 peut par exemple présenter une structure feuilletée réalisée à partir de disques annulaires empilés axialement et réalisés à partir de tôle métallique.

En outre, dans l'exemple de la Figure 1, les éléments ferromagnétiques 78 comportent une cage d'écureuil 79.

La cage d'écureuil 79 comprend une pluralité de barres longitudinales 80 disposées en périphérie du rotor 62 et espacées angulairement de façon régulière autour de l'axe A-A'.

Chaque barre longitudinale présente une extrémité dorsale 801 et une extrémité frontale 802.

De manière connue, les barres longitudinales 80 peuvent présenter une légère inclinaison selon l'axe longitudinal de l'enveloppe ou encore être sensiblement parallèles à cet axe.

Dans l'exemple de la Figure 1, les barres longitudinales 80 sont sensiblement parallèles à l'axe A-A'.

Les barres longitudinales 80 sont réalisées à partir d'un matériau conducteur d'électricité et sont destinées à accueillir des courants induits générés par le stator lors de l'alimentation du moteur 10.

La cage d'écureuil 79 comprend également deux anneaux 82, 83 de court-circuit parallèles entre eux et fixés sur le rotor 62. Dans l'exemple de la Figure 1, les deux anneaux 82, 83 présentent tous les deux un même axe central sensiblement confondu avec l'axe A-A'.

Les extrémités 801, 802 de chacune des barres 80 sont respectivement fixées sur chacun des anneaux 82, 83.

En variante, les éléments ferromagnétiques 78 comportent des aimants permanents répartis sur le pourtour de la culasse 68.

Le stator 64 du moteur comprend une culasse de stator 84 et des bobines 86.

La culasse 84 présente une forme générale cylindrique et est fixée au contact de la paroi interne 34. La culasse du stator 84 comporte des éléments ferromagnétiques 88 qui, conjointement aux bobines 86, sont adaptés pour engendrer un champ magnétique variable destiné à coopérer avec les éléments magnétiques 78 de la culasse 68.

Ainsi, la culasse 84 peut par exemple présenter une structure feuilletée réalisée à partir de disques annulaires empilés axialement et réalisés à partir de tôle métallique.

Les bobines 86 du stator définissent des boucles 90. Chaque boucle 90 présente deux portions longitudinales 92 sensiblement parallèles à l'axe longitudinal A-A' et deux têtes de bobines 94 venues de matière avec les portions longitudinales 92 et situées de part et d'autre de celles-ci.

Chaque bobine 86 comprend un enroulement filaire 96 réalisé à partir d'un matériau conducteur d'électricité, par exemple d'un alliage de cuivre.

Dans l'exemple de la Figure 1, le stator 64 comprend une pluralité de bobines 86 écartées radialement de l'axe longitudinal A-A' et espacées angulairement de façon régulière autour de l'axe longitudinal A-A'.

Lors du fonctionnement d'un moteur 10 selon l'invention, les bobines 86 sont alimentées en électricité. Le champ magnétique variable résultant du passage du courant dans le stator 64 interagit avec les éléments ferromagnétiques 78 pour engendrer un couple de rotation appliqué à la culasse 68 du rotor 62. L'arbre 66 dont la culasse 68 est solidaire est alors entraîné en rotation autour de l'axe longitudinal A-A'.

Le couple appliqué à l'arbre 66 est ainsi transmis au mécanisme de déplacement de l'engin (non visible) par l'intermédiaire de la partie saillante 76 de l'arbre 66.

Les moyens 18 de refroidissement liquide comprennent une conduite de circulation 98 de liquide ménagée dans la paroi externe 36 et obturée vers l'extérieur 22 par la peau 42.

La conduite 98 comprend une succession de segments de conduite 100 longitudinaux de hauteur inférieure à la hauteur de la peau 42 et espacés angulairement autour de l'axe A-A'. Chaque segment longitudinal 100 est raccordé à chacun de ses segments longitudinaux 100 adjacents par un segment circonférentiel (non visible sur la Figure 1).

Ainsi, deux segments longitudinaux 100 adjacents de la conduite présentent des sens de circulation du liquide de refroidissement opposés.

Dans l'exemple de la Figure 1, la conduite 98 présente ainsi une forme générale crénelée autour de la circonférence de l'enveloppe 24.

Les moyens 18 de refroidissement liquide comprennent également une conduite d'alimentation 104 de la conduite 98 en liquide caloporteur et une conduite d'évacuation du liquide caloporteur (non visible sur la Figure 1).

Dans l'exemple de la Figure 1, le liquide caloporteur utilisé est de l'eau.

Les moyens 20 de couplage thermique entre le compartiment intérieur 14 et l'extérieur 22 comprennent un dispositif 106 de brassage du volume intérieur gazeux 15 et un échangeur thermique 108 rapporté dans le compartiment intérieur 14 au contact de la paroi interne 34.

Le dispositif 106 de brassage d'air comprend une pluralité d'ailettes 110, chacune des ailettes 110 étant montée sur un moyeu 112 fixé sur le rotor 62. Dans l'exemple de la Figure 1, les ailettes 110 sont espacés angulairement de façon régulière autour de l'axe A-A'.

Lorsque l'arbre 66 est en rotation, le moyeu 112 est également entraîné conjointement en rotation autour de l'axe A-A'. Les ailettes 110 engendrent une circulation du volume gazeux 15 afin d'en homogénéiser la température.

L'échangeur thermique 108 comprend un support 116 et des ailettes 118 fixes qui font saillie radialement à partir du support 116.

Il est réalisé à partir d'un matériau bon conducteur de chaleur, tel qu'un métal.

Dans l'exemple des Figures 1 et 2, l'échangeur thermique 108 est ainsi réalisé à partir d'aluminium.

Le support 116 présente une forme générale annulaire présentant un axe central B-B'.

Le support 116 présente également une surface externe 120 de section circulaire d'axe central B-B'.

Lorsque la surface externe 120 est disposée au contact de la paroi interne 34, l'axe central B-B' est alors sensiblement confondu avec l'axe longitudinal A-A'.

Dans l'exemple des Figures 1 et 2, le diamètre de la surface externe 120 est légèrement supérieur au diamètre de la paroi interne 34. L'échangeur 108 est ainsi emmanché à force dans la carcasse 12, et est maintenu plaqué contre la paroi interne 34 par expansion du support 116.

D'autres variantes sont envisageables dans lesquelles le diamètre de la surface externe 120 est sensiblement égal au diamètre de la paroi interne 34. L'échangeur thermique 108 peut être alors fixé, par exemple par soudure, vissage ou rivetage à la carcasse 12.

Le support 116 présente également une surface interne 122 présentant une section sensiblement circulaire selon l'axe central B-B'.

Les ailettes 118 font saillie radialement à partir de la surface interne 122.

Dans l'exemple des Figures 1 et 2, le support 116 et les ailettes 118 sont venus de matière.

En variante, les ailettes 118 sont fixées sur la surface interne 122, par exemple vissées, rivetées, soudées, etc.

Dans l'exemple des Figures 1 et 2, les ailettes 118 présentent ainsi dans un plan perpendiculaire à l'axe central B-B' une section de forme générale effilée radialement avec un sommet libre orienté sensiblement vers l'axe central B-B'.

Dans des variantes, les ailettes 118 présentent une structure différente. Par exemple, chacune des ailettes 118 peut être constituée d'une plaque sensiblement plane ou présenter une section incurvée.

L'échangeur thermique 108 est fixé sur la paroi interne 34 dans un espace annulaire 124 délimité axialement d'un côté par le stator 64 et d'un autre côté par le flasque frontal 30, et délimité radialement dans un sens, par les têtes 94 des bobines 86 et dans un autre sens, par la paroi interne 34.

En variante, et comme également illustré sur la Figure 1, l'échangeur thermique peut être fixé sur la paroi interne 34 dans un espace annulaire 126 délimité axialement par le stator 64 et par le flasque dorsal 32 et radialement par la paroi interne 34 de l'enveloppe 24 et les têtes 94 de bobines 86.

Ainsi l'échangeur thermique 108 reçoit, entre les ailettes 118, les têtes de bobines 94 situées à une extrémité du stator, ainsi qu'une partie de l'arbre rotatif 74.

Dans un moteur 10 selon l'invention, les ailettes 118 baignent ainsi dans le volume intérieur gazeux 15 du compartiment intérieur 14 au voisinage des têtes 94 des bobines 86, qui sont une source de chaleur importante dans le moteur 10. En outre, l'échangeur 108 est ainsi disposé axialement en regard de la conduite 98 vers laquelle l'échangeur 108 transfère la chaleur qui lui est communiquée à travers le volume intérieur gazeux 15.

Le fonctionnement du moteur 10 selon l'invention va maintenant être décrit.

Lorsque le moteur 10 est alimenté électriquement, une partie de l'énergie électrique reçue par le moteur 10 de la part des moyens d'alimentation du moteur (non visibles) est convertie en énergie mécanique destinée à actionner un mécanisme de déplacement (non visible) de l'engin.

Une autre partie de l'énergie électrique reçue est dissipée sous forme de chaleur en différents emplacements du compartiment intérieur 14 du moteur 10. De manière connue, ces pertes peuvent comprendre par exemple les pertes par effet Joule dû aux bobines 86 - pouvant représenter plus de 50% des pertes totales -, les pertes magnétiques dites « pertes fer », les pertes par frottement des pièces mobiles du moteur, etc.

Le dispositif 106 de brassage d'air homogénéise alors la distribution de chaleur dans le compartiment intérieur 14, la chaleur étant générée à différents emplacements dans celui-ci.

Cette chaleur est ensuite transférée par convection aux ailettes 118 de l'échangeur thermique 108 à travers le volume intérieur gazeux 15. Puis la chaleur est transférée par conduction par l'échangeur thermique 108 à l'enveloppe 24 dans laquelle est ménagée la conduite de circulation 98. Le liquide caloporteur évacue enfin la chaleur vers l'extérieur 22 du moteur par la conduite d'évacuation.

La dissipation de chaleur réalisée par l'échangeur thermique 108 diminue la température du compartiment intérieur 14 d'environ 10°C.

Le moteur selon l'invention est ainsi simplifié par rapport au moteur tel que décrit dans EP 2 282 395, l'échangeur thermique 108 présentant une structure simple et un fonctionnement fiable et efficace. En outre, comme décrit ci-dessous et à l'inverse du moteur décrit dans EP 2 282 395, le montage de l'échangeur thermique 108 est simple, ne nécessite aucun aménagement particulier du moteur 10, et peut être réalisé au cours de la vie de celui-ci.

Le montage de l'échangeur thermique 108 dans un moteur 10 selon l'invention va maintenant être décrit.

Initialement, l'échangeur thermique 108 est fabriqué par usinage du support 116 et des ailettes 118.

Dans le cas d'un moteur 10 existant déjà monté, le flasque frontal 30 est alors ôté de la carcasse 34 pour dégager l'ouverture frontale 26.

L'échangeur thermique 108 est ensuite déformé, par exemple par un effort de compression radiale par rapport à l'axe central B-B' induisant une déformation de l'échangeur 108 selon une fente ménagée radialement dans son support 116. Il est ensuite inséré dans l'ouverture frontale 26. La déformation appliquée à l'échangeur 108 est suffisante pour autoriser son passage entre l'enveloppe 24 et les têtes de bobines 94.

La surface externe 120 est ensuite disposée au contact de la paroi interne 34, l'axe central B-B' et l'axe longitudinal A-A' étant confondus.

L'échangeur thermique 108 reprend alors sa forme initiale.

Le diamètre de la surface externe 120 étant légèrement supérieur à celui de la paroi interne 34, l'échangeur thermique 108 est maintenu plaqué contre l'enveloppe 24 par expansion de son support 116.

Le flasque frontal 30 est ensuite vissé sur la lèvre périphérique frontale 38.

Le montage de l'échangeur thermique 108 ne nécessite donc pas d'aménagement particulier du moteur 10 pour être monté. Il peut par conséquent être monté sur un nouveau moteur ou au cours de la vie d'un moteur ayant déjà fonctionné, lors d'une procédure de maintenance par exemple.

D'autres variantes sont envisageables dans lesquelles la surface externe 120 du support 116 présente un diamètre sensiblement égal à celui de la paroi interne 34 de l'enveloppe 24.

L'échangeur 108 est alors inséré dans l'enveloppe 24, disposé au contact de la paroi interne 34 dans la position qu'il est destiné à occuper, et fixé par rivetage ou vissage sur la paroi interne 34.

D'autres modes de réalisation du moteur fermé 10 selon l'invention sont envisageables dans lesquels les moyens de couplage thermique 20 comprennent deux, voire avantageusement quatre échangeurs thermiques 108 fixés sur la paroi interne 34 dans l'espace annulaire 124 et/ou dans l'espace annulaire 126.

## Revendications

1. Moteur électrique fermé (10) comprenant :
- une carcasse (12) délimitant un compartiment intérieur (14) définissant un volume intérieur gazeux (15), la carcasse (12) comprenant une enveloppe (24) de forme générale cylindrique selon un axe central (A-A'), dont les ouvertures frontale (26) et dorsale (28) sont obturées par des flasques frontal (30) et dorsale (32) respectivement, l'enveloppe (24) comprenant une paroi interne (34) délimitant le compartiment intérieur (14) et une paroi externe (36),
- des moyens (16) de conversion de l'énergie électrique reçue par le moteur (10) en énergie mécanique, les moyens de conversion (16) comprenant un stator (64) et un rotor (62), le stator (64) comprenant au moins des bobines (86),
- des moyens (18) de refroidissement liquide du compartiment intérieur (14) du moteur (10), ménagés dans la paroi externe (36) de l'enveloppe (24), et
- des moyens (20) de couplage thermique entre le compartiment intérieur (14) et les moyens (18) de refroidissement liquide, les moyens (20) de couplage thermique comprennent ur échangeur thermique (108) rapporté sur la carcasse (12) dans le compartiment intérieur (14), l'échangeur (108) comportant un support (116) annulaire d'axe central (A-A') appliqué sur la paroi interne (34) de l'enveloppe (24) de la carcasse (12) et une pluralité d'ailettes (118) faisant saillie radialement vers l'axe central (A-A') à partir d'une surface interne (122) du support (116),
**caractérisé en ce que** les ailettes (118) de la pluralité d'ailettes étant espacées angulairement sur sensiblement la totalité de la circonférence de la surface interne (122) du support (116).

2. Moteur (10) selon la revendication 1, **caractérisé en ce que** les ailettes (118) baignent dans le volume intérieur gazeux (15) du compartiment intérieur (14).

3. Moteur (10) selon la revendication 1 ou 2, caractérisé en que les ailettes (118) présentent une section transversale de forme générale effilée radialement, notamment triangulaire.

4. Moteur (10) selon l'une quelconque des revendications précédentes, **caractérisé en ce que** la ou chaque ailettes (118) est venue de matière avec le support (116).

5. Moteur (10) selon l'une quelconque des revendications précédentes, **caractérisé en ce que** chaque bobine (86) comporte une tête (94) de bobine à une extrémité axiale, l'échangeur thermique (108) étant situé radialement entre les têtes (94) des bobines (86) et la carcasse (12).

6. Moteur (10) selon l'une quelconque des revendications précédentes, **caractérisé en ce que** l'échangeur thermique (108) est réalisé à partir de métal, avantageusement d'aluminium.

7. Moteur (10) selon l'une quelconque des revendications précédentes, **caractérisé en ce que** l'échangeur thermique (108) est monté en force dans la carcasse (12).

8. Moteur (10) sur l'une quelconque des revendications précédentes, **caractérisé en ce que** les moyens (20) de couplage thermique comprennent une pluralité d'échangeurs thermiques (108), chaque échangeur thermique (108) étant rapporté sur la carcasse (12) dans le compartiment intérieur (14) et comportant un support annulaire (116) d'axe central (A-A') appliqué sur la paroi interne (34) de l'enveloppe (24) de la carcasse (12) et une pluralité d'ailettes (118) faisant saillie radialement vers l'axe central à partir d'une surface interne (122) du support (116) de chaque échangeur (108).

9. Moteur (10) selon l'une quelconque des revendications précédentes, **caractérisé en ce que** le rotor (62) comporte un arbre (66) d'entraînement d'un mécanisme de déplacement d'un engin.

10. Moteur (10) selon l'une quelconque des revendications précédentes, **caractérisé en ce que** les moyens (20) de couplage thermique comprennent un dispositif (106) de brassage du volume intérieur gazeux (15) porté par le rotor (62).

11. Moteur (10) selon la revendication 10 **caractérisé en ce que** le dispositif (104) de brassage d'air comprend au moins une ailette (110) montée sur un moyeu (112) fixé sur le rotor (62).

12. Moteur (10) selon l'une quelconque des revendications précédentes, **caractérisé en ce que** les moyens (18) de refroidissement liquide comportent une conduite de circulation (98) ménagée dans la carcasse (12), l'échangeur thermique (108) étant placé en regard de la conduite de circulation (98).

## Patentansprüche

1. Geschlossener Elektromotor (10), umfassend:
- ein Gehäuse (12), das einen Innenraum (14) begrenzt, der ein gasförmiges Innenvolumen (15) definiert, wobei das Gehäuse (12) einen Mantel (24) von allgemein zylindrischer Form entlang einer Mittelachse (A-A') aufweist, dessen vorderseitige (26) und rückseitige (28) Öffnungen jeweils durch vorderseitige (30) und rückseitige (32) Flansche verschlossen sind, wobei der Mantel (24) eine den Innenraum (14) begrenzende Innenwand (34) und eine Außenwand (36) aufweist,
- Mittel (16) zum Umwandeln von durch den Motor (10) empfangener elektrischer Energie in mechanische Energie, wobei die Umwandlungsmittel (16) einen Stator (64) und einen Rotor (62) umfassen, wobei der Stator (64) mindestens Spulen (86) umfasst,
- Mittel (18) zur Flüssigkeitskühlung des Innenraums (14) des Motors (10), die in der Außenwand (36) des Gehäuses (24) vorgesehen sind, und
- Mittel (20) zur thermischen Kopplung zwischen dem Innenraum (14) und den Flüssigkeitskühlmitteln (18),
die Mittel (20) zur thermischen Kopplung einen Wärmetauscher (108) umfassen, der an dem Gehäuse (12) in dem Innenraum (14) befestigt ist, wobei der Wärmetauscher (108) einen mit der Mittelachse (A-A') versehenen ringförmigen Träger (116), der an der Innenwand (34) des Mantels (24) des Gehäuses (12) angebracht ist, und eine Mehrzahl von Rippen (118) aufweist, die von einer Innenfläche (122) des Trägers (116) radial zur Mittelachse (A-A') hervorragen,
**dadurch gekennzeichnet, dass** die Rippen der Mehrzahl von Rippen (118) im Wesentlichen um den gesamten Umfang der Innenfläche (122) des Trägers (116) herum winkelbeabstandet sind.

2. Motor (10) nach Anspruch 1, **dadurch gekennzeichnet, dass** die Rippen (118) in das gasförmige Innenvolumen (15) des Innenraums (14) eintauchen.

3. Motor (10) nach Anspruch 1 oder 2, **dadurch gekennzeichnet, dass** die Rippen (118) einen allgemein radial verjüngten, insbesondere dreieckigen Querschnitt aufweisen.

4. Motor (10) nach einem beliebigen der vorhergehenden Ansprüche, **dadurch gekennzeichnet, dass** die oder jede Rippe (118) einstückig mit dem Träger (116) ausgebildet ist.

5. Motor (10) nach einem beliebigen der vorhergehenden Ansprüche, **dadurch gekennzeichnet, dass** jede Spule (86) an einem axialen Ende einen Spulenkopf (94) aufweist, wobei der Wärmetauscher (108) radial zwischen den Köpfen (94) der Spulen (86) und dem Gehäuse (12) angeordnet ist.

6. Motor (10) nach einem beliebigen der vorhergehenden Ansprüche, **dadurch gekennzeichnet, dass** der Wärmetauscher (108) aus Metall, vorteilhafterweise aus Aluminium, hergestellt ist.

7. Motor (10) nach einem beliebigen der vorhergehenden Ansprüche, **dadurch gekennzeichnet, dass** der Wärmetauscher (108) in das Gehäuse (12) eingepresst ist.

8. Motor (10) nach einem beliebigen der vorhergehenden Ansprüche, **dadurch gekennzeichnet, dass** die Mittel (20) zur thermischen Kopplung eine Mehrzahl von Wärmetauschern (108) umfassen, wobei jeder Wärmetauscher (108) an dem Gehäuse (12) in dem Innenraum (14) befestigt ist und einen mit der Mittelachse (A-A') versehenen ringförmigen Träger (116), der an der Innenwand (34) des Mantels (24) des Gehäuses (12) angebracht ist, und eine Mehrzahl von Rippen (118) aufweist, die von einer Innenfläche (122) des Trägers (116) jedes Wärmetauschers (108) radial zur Mittelachse hervorragen.

9. Motor (10) nach einem beliebigen der vorhergehenden Ansprüche, **dadurch gekennzeichnet, dass** der Rotor (62) eine Welle (66) zum Antrieb eines Mechanismus zum Bewegen einer Maschine aufweist.

10. Motor (10) nach einem beliebigen der vorhergehenden Ansprüche, **dadurch gekennzeichnet, dass** die Mittel (20) zur thermischen Kopplung eine vom Rotor (62) getragene Vorrichtung (106) zum Mischen des inneren Gasvolumens (15) umfassen.

11. Motor (10) nach Anspruch 10, **dadurch gekennzeichnet, dass** die Vorrichtung (104) zum Mischen von Luft mindestens eine Schaufel (110) umfasst, die an einer am Rotor (62) befestigten Nabe (112) angebracht ist.

12. Motor (10) nach einem beliebigen der vorhergehenden Ansprüche, **dadurch gekennzeichnet, dass** die Flüssigkeitskühlmittel (18) einen im Gehäuse (12) vorgesehenen Zirkulationskanal (98) umfassen, wobei der Wärmetauscher (108) gegenüber dem Zirkulationskanal (98) angeordnet ist.

## Claims

1. Closed electric motor (10) comprising:
- a housing (12) delineating an interior compartment (14) defining an interior volume of gas (15), the housing (12) comprising a casing (24) of generally cylindrical shape along a central axis (A-A'), whose front and rear openings (26, 28) are closed by front and rear flanges (30, 32) respectively, the casing (24) comprising an inner wall (34) delineating the interior compartment (14) and an outer wall (36),
- means (16) for converting the electrical energy received by the motor (10) into mechanical energy, the conversion means (16) comprising a stator (64) and a rotor (62), the stator (64) comprising at least coils (86),
- means (18) for liquid cooling the interior compartment (14) of the motor (10), provided in the outer wall (36) of the casing (24), and
- means (20) of thermal coupling between the interior compartment (14) and the means (18) for liquid cooling,
the means (20) of thermal coupling comprise a heat exchanger (108) mounted on the housing (12) in the interior compartment (14), the exchanger (108) including an annular support (116) along the central axis (A-A') applied over the inner wall (34) of the casing (24) of the housing (12) and a plurality of fins (118) projecting radially towards the central axis (A-A') from an inner surface (122) of the support (116),
**characterised in that** the fins (118) of the plurality of fins are spaced angularly over substantially the entire circumference of the inner surface (122) of the support (116).

2. Motor (10) according to claim 1, **characterised in that** the radial projections (118) are immersed in the interior volume of gas (15) of the interior compartment (14).

3. Motor (10) according to claim 1 or 2, **characterised in that** the fins (118) have a cross section with a general form that is radially tapering, and notably triangular.

4. Motor (10) according to any one of the preceding claims, **characterised in that** the or each fin (118) is formed integrally with the support (116).

5. Motor (10) according to any one of the preceding claims, **characterised in that** each coil (86) has a coil winding overhang (94) at one axial end, the heat exchanger (108) being located radially between the winding overhangs (94) of the coils (86) and the housing (12).

6. Motor (10) according to any one of the preceding claims, **characterised in that** the heat exchanger (108) is constructed out of metal, advantageously from aluminium.

7. Motor (10) according to the any one of the preceding claims, **characterised in that** the heat exchanger (108) is press fitted into the housing (12).

8. Motor (10) of any one of the preceding claims, **characterised in that** the means (20) of thermal coupling comprise a plurality of heat exchangers (108), each heat exchanger (108) being mounted on the housing (12) in the interior compartment (14) and comprising an annular support (116) along the central axis (A-A') applied over the inner wall(34) of the casing (24) of the housing (12) and a plurality of fins (118) projecting radially extending towards the central axis from an inner surface (122) of the support (116) of each heat exchanger (108).

9. Motor (10) according to any one of the preceding claims, **characterised in that** the rotor (62) comprises of a drive shaft assembly (66) for a mechanism for the movement of a machine unit.

10. Motor (10) according to any one of the preceding claims, **characterised in that** the means (20) of thermal coupling comprise a device (106) for agitation of the interior volume of gas (15) carried by the rotor (62).

11. Motor (10) according to claim 10, **characterised in that** the air agitating device (104) comprises at least one fin (110) mounted on a hub (112) fixed on to the rotor (62).

12. Motor (10) according to any one of the preceding claims, **characterised in that** the liquid cooling means (18) includes a circulation pipe (98) provided in the housing (12), the heat exchanger (108) being positioned opposite the circulation pipe (98).
